# EUROPEAN PATENT APPLICATION

(11) **EP 4 534 879 A1**
(43) Date of publication of application: **09.04.2025**
(21) Application number: 23815592.3
(22) Date of filing: 13.04.2023
(51) Int. Cl.: F16K 31/06

(54) **ELECTRICALLY DRIVEN VALVE**

(30) Priority: 02.06.2022 JP 2022090294
(71) Applicant: Fujikoki Corporation, Tokyo 158-0082 (JP)
(72) Inventor: KOJIMA, Masashi, Tokyo 158-0082 (JP); AMANO, Ayumu, Tokyo 158-0082 (JP); SAKURAI, Takahiro, Tokyo 158-0082 (JP)
(74) Representative: Ter Meer Steinmeister & Partner
(86) International application number: PCT/JP2023/014945
(87) International publication number: WO 2023/233830

(57) **Abstract**

An electric drive valve includes a valve main body having a main valve chamber and a pilot valve chamber, and having a refrigerant inflow port and a refrigerant outflow port with a main valve seat, a main valve body opening and closing the outflow port, a valve opening spring biasing the main valve body in a valve opening direction, a pilot passage selectively communicating the pilot valve chamber and the outflow port, a pressure equalizing channel communicating the main valve chamber and the pilot valve chamber, a pilot valve seat, a pilot valve body opening and closing the pilot passage, and an electric driving device driving the pilot valve body. The inflow port is formed to be open to a side surface portion of the main valve chamber, and a lower end of the valve opening spring is positioned above a lower end of the inflow port.

## Description

### TECHNICAL FIELD

The present invention relates to an electric drive valve, and more particularly to a valve structure which prevents a valve opening spring disposed in a main valve of a pilot type drive valve from engaging with a valve seat portion.

### BACKGROUND ART

An electric drive valve (which may be simply referred to as "drive valve" in the present application) which opens and closes a valve with the use of an electric driving device such as a solenoid or an electric motor has been used in a refrigeration cycle device which is provided with a refrigerant circuit, for example, an air conditioner, a refrigeration device and a freezing device.

Further, there is a pilot type drive valve which is configured to drive a pilot valve to be opened and closed by a driving device and open and close a main valve in response to the opening and closing motion of the pilot valve, as the drive valve mentioned above. In the pilot type drive valve, in order to generally open the main valve securely even in a zero differential pressure, a coil spring (a valve opening spring) biasing a main valve body in a valve opening direction is disposed in a main valve chamber.

Further, there is the following patent literature as a document which discloses the pilot type drive valve including the valve opening spring mentioned above.

### CITATION LIST

### PATENT LITERATURE

Patent Literature 1: Japanese Unexamined Patent Publication No. 2019-7572

### SUMMARY OF INVENTION

### TECHNICAL PROBLEM

In the conventional drive valve as mentioned above, an engagement of the valve opening spring is generated by a fluid force of a refrigerant flowing into the main valve chamber, and an opening failure of the drive valve and a valve leakage may occur.

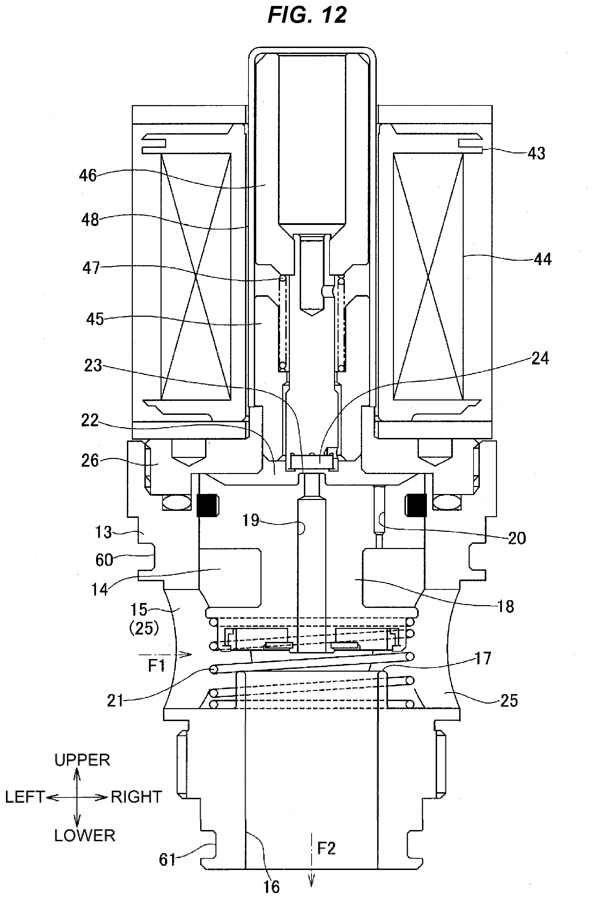

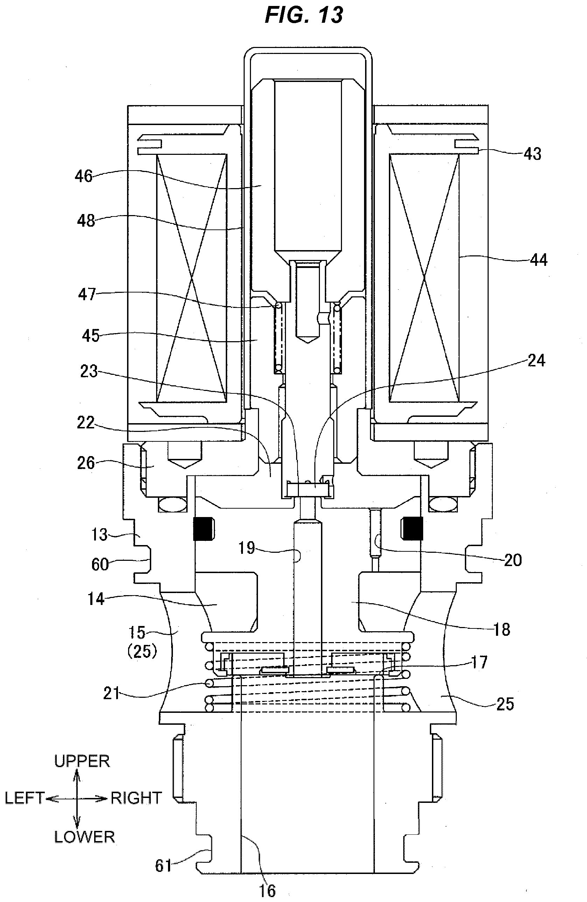

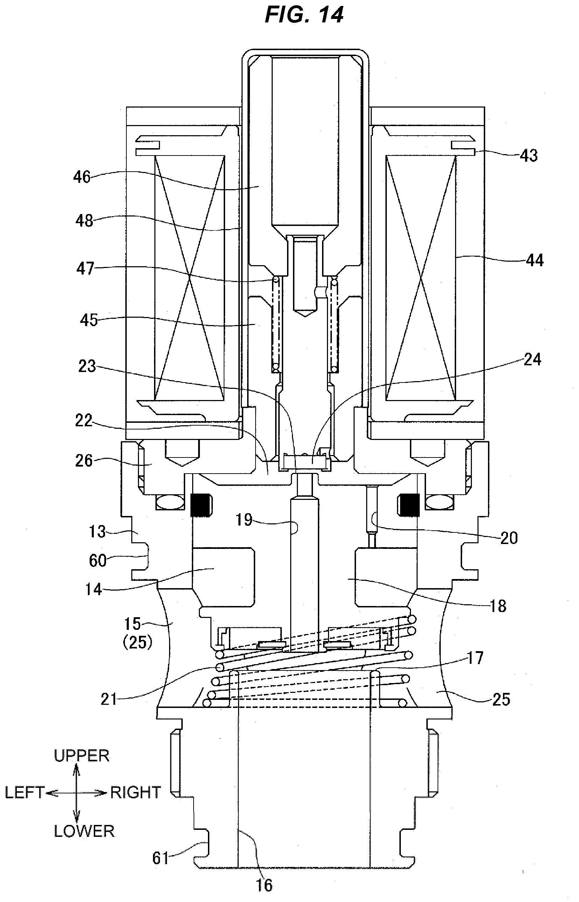

Fig. 12 shows a valve opened state of the conventional drive valve. A valve opening spring 21 is pushed and deformed by a refrigerant (refer to reference symbol F1) flowing into a main valve chamber 14 from an inflow port 15. When closing the valve, a main valve body 18 should inherently seat on a main valve seat 17 to close an outflow port 16 as shown in Fig. 13. However, as shown in Fig. 14, there may occur a state in which the main valve body 18 does not normally operate due to an engagement of the valve opening spring 21 (pinching between the main valve body 18 and the main valve seat 17).

In particular, in a heat pump cycle device in which a gas-liquid two-phase refrigerant flows, the valve opening spring 21 is pressed by a liquid phase having a strong pressing force when being started, and the engagement accordingly tends to be generated.

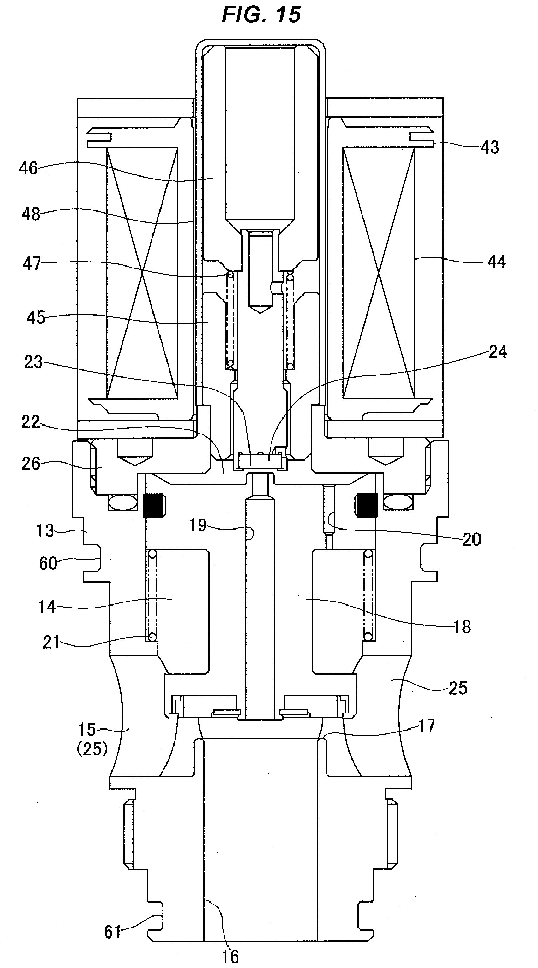

In the meantime, in order to prevent the engagement, there can be thought that the valve opening spring 21 is arranged above an upper end of the inflow port 15 in such a manner as to be out of the flow channel of the refrigerant as shown in Fig. 15. However, in a case where the structure mentioned above is employed, a height dimension of the drive valve is disadvantageously increased.

The drive valve shown in Figs. 12 to 15 is a normal open type (normally open type) drive valve. However, in a normal closed type (normally closed type) drive valve, the valve opening spring is similarly used, and the problem of the engagement as mentioned above may be accordingly generated.

Further, in the conventional drive valve provided with the valve opening spring, there is room for improving an ease of assembly particularly about the normal closed type valve.

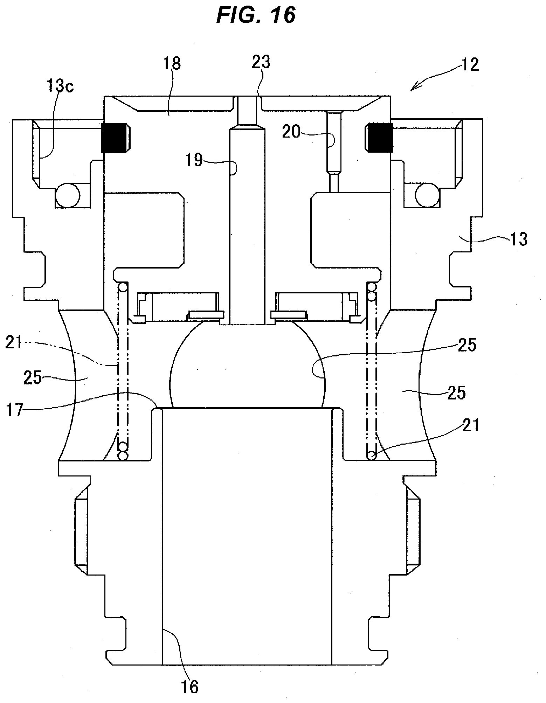

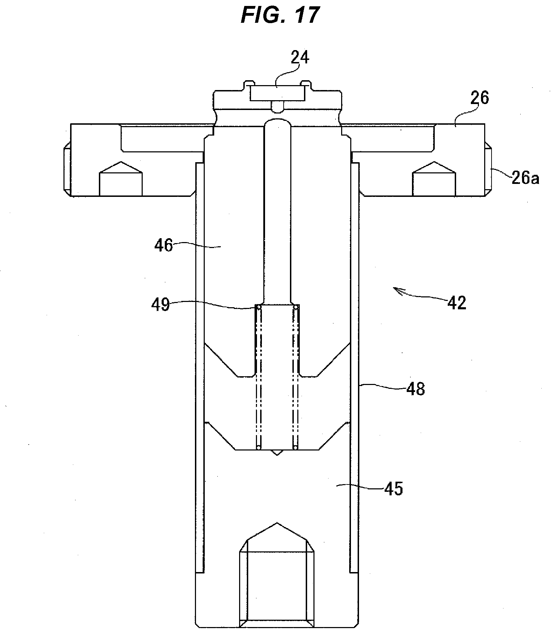

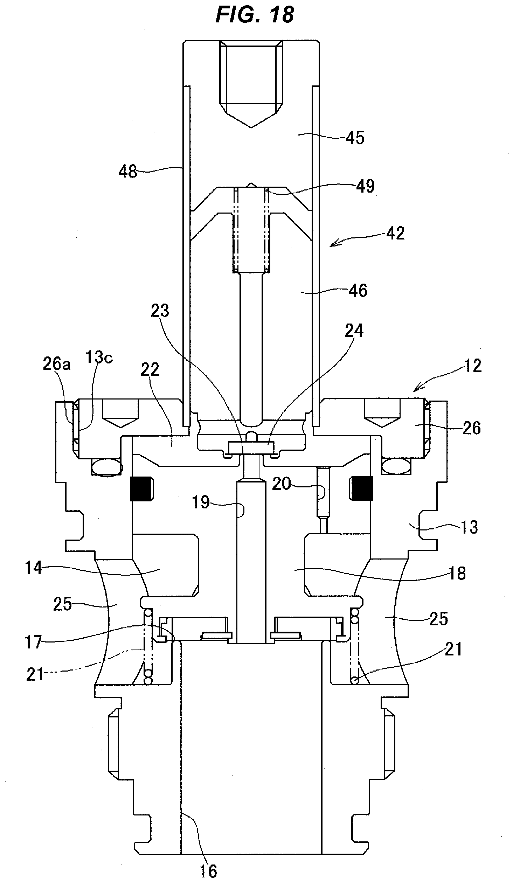

Specifically, in order to assemble the normal closed type drive valve, it is necessary to perform a work of preparing a valve portion 12 in which a valve opening spring 21 and a main valve body 18 are inserted into a valve main body 13 in sequence as shown in Fig. 16, and a driving portion 42 in which a valve closing spring 49 and a plunger 46 are inserted into a sleeve 48 one end of which is closed by a suction element 45 and the other end of which a connecting member 26 is fixed to, in sequence from the other end side of the sleeve 48 as shown in Fig. 17, and screwing the connecting member 26 into an upper surface opening of the valve main body 13 (engaging a male screw 26a formed on an outer peripheral surface of the connecting member 26 with a female screw 13c formed on the upper surface opening of the valve main body 13 to connect both the elements (the valve portion 12 and the driving portion 42) (a connected state is shown in Fig. 18).

In this case, the valve opening spring 21 and the main valve body 18 in the valve portion 12 are only inserted into the valve main body 13 and are not fixed to the valve main body 13, and the valve closing spring 49 and the plunger 46 are only inserted into the sleeve 48 and are not fixed similarly. Therefore, when performing the work of connecting the valve portion 12 and the driving portion 42, it is necessary to perform the work while considering so as to prevent them from falling (prevent the main valve body 18 and the valve opening 21 from falling out of the valve main body 13 and prevent the plunger 46 and the valve closing spring 49 from falling out of the sleeve 48) and this is troublesome.

Therefore, an object of the present invention is to prevent a valve opening spring from engaging caused by a pressing force of a refrigerant, and to prevent an operation failure of an electric drive valve and a valve leakage from being generated. Further, a further object of the present invention is to improve an ease of assembly for an electric drive valve.

### SOLUTION TO PROBLEM

### [First Invention]

In order to solve the problem mentioned above and achieve the object, an electric drive valve according to a first invention of the present invention includes a valve main body which has a main valve chamber and a pilot valve chamber in an inner portion thereof, has an inflow port allowing a refrigerant to flow into the main valve chamber and an outflow port allowing the refrigerant to flow out of the main valve chamber, and is provided with a main valve seat disposed in an end portion of the outflow port in the main valve chamber side, a main valve body which opens and closes the outflow port by moving forward and backward with respect to the main valve seat, a valve opening spring which biases the main valve body in a valve opening direction, a pilot passage which passes through the main valve body and selectively communicates the pilot valve chamber and the outflow port, a pressure equalizing channel which communicates the main valve chamber and the pilot valve chamber, a pilot valve seat which is formed in an end portion of the pilot passage in the pilot valve chamber side, a pilot valve body which opens and closes the pilot passage by moving forward and backward with respect to the pilot valve seat, and an electric driving device which drives the pilot valve body, wherein the inflow port is formed in such a manner as to be open to a side surface portion of the main valve chamber, and the valve opening spring is disposed in such a manner that a lower end of the valve opening spring is positioned above a lower end of the inflow port on the assumption that a direction toward the main valve body from the main valve seat is up and a direction toward the main valve seat from the main valve body is down.

In the first invention of the present invention, the valve opening spring is disposed in such a manner that the lower end of the valve opening spring is positioned above the lower end of the inflow port into which the refrigerant flows. Thus, it is possible to reduce the pressing force which is applied to the valve opening spring from the refrigerant flowing into the main valve chamber from the inflow port. Particularly, in a gas-liquid two-phase state of the refrigerant, a liquid phase having a greater mass (specific gravity) than a gas phase and a stronger pressing force for the valve opening spring flows in a lower end side of the inflow port. However, the liquid phase can be avoided (the pressing force applied by the liquid phase can be lightened even if the liquid phase can not be completely avoided) by arranging the lower end of the valve opening spring above the lower end of the inflow port. Thus, it is possible to effectively prevent the valve opening spring from engaging and it is possible to prevent the operation failure of the electric drive valve and the valve leakage from being generated.

Further, in the first invention mentioned above, the valve opening spring is preferably disposed in such a manner that the lower end of the valve opening spring is positioned below an upper end of the inflow port.

A height dimension of the drive valve can be suppressed. The valve opening spring can be completely out of the inflow port (a whole of the valve opening spring can be arranged above the upper end of the inflow port) in such a manner as not to be directly exposed to the pressing force of the refrigerant flowing into from the inflow port. However, in this structure, the height dimension of the drive valve is enlarged as mentioned above. Therefore, it is preferable to employ the aspect mentioned above, that is, the valve opening spring is preferably disposed in such a manner that the lower end of the valve opening spring is positioned above the lower end of the inflow port and below the upper end of the inflow port.

### [Second Invention]

An electric drive valve according to a second invention of the present invention includes a valve main body which has a main valve chamber and a pilot valve chamber in an inner portion thereof, has an inflow port allowing a refrigerant to flow into the main valve chamber and an outflow port allowing the refrigerant to flow out of the main valve chamber, and is provided with a main valve seat disposed in an end portion of the outflow port in the main valve chamber side, a main valve body which opens and closes the outflow port by moving forward and backward with respect to the main valve seat, a valve opening spring which biases the main valve body in a valve opening direction, a pilot passage which passes through the main valve body and selectively communicates the pilot valve chamber and the outflow port, a pressure equalizing channel which communicates the main valve chamber and the pilot valve chamber, a pilot valve seat which is formed in an end portion of the pilot passage in the pilot valve chamber side, a pilot valve body which opens and closes the pilot passage by moving forward and backward with respect to the pilot valve seat, and an electric driving device which drives the pilot valve body, wherein the valve opening spring is disposed in such a manner that a lower end of the valve opening spring is positioned above the main valve seat on the assumption that a direction toward the main valve body from the main valve seat is up and a direction toward the main valve seat from the main valve body is down.

In the second invention of the present invention, the valve opening spring is disposed in such a manner that the lower end of the valve opening spring is positioned above the main valve seat. When opening the valve, the refrigerant flows into the main valve chamber from the inflow port and is discharged out of the outflow port. The main valve seat is disposed in the upper end portion of the outflow port. Therefore, as long as the valve opening spring is arranged above the main valve seat, it is possible to reduce the force applied to the valve opening spring from the flow of the refrigerant flowing into from the inflow port and discharged out of the outflow port, and it is possible to suppress or prevent the engagement of the valve opening spring.

Further, according to an aspect of the present invention ("present invention" indicates both the first invention and the second invention), in the first and second inventions and the preferable aspect of the first invention, a plurality of support portions are disposed in an inner peripheral surface of the main valve chamber, the support portions protruding toward a center portion of the main valve chamber from the inner peripheral surface of the main valve chamber and supporting the lower end side of the valve opening spring, and the main valve body is guided by the support portions by moving up and down while being in contact with the support portions.

According to the aspect mentioned above, it is possible to inhibit the main valve body moving up and down in association with the opening and closing motion of the valve from being inclined, thereby enhancing an operability and a durability of the drive valve. The support portions may be integrally formed with the valve main body or may be formed by a different member.

Further, in the aspect mentioned above, one or more support portion among a plurality of support portions may have a lower end locking portion which holds the lower end portion of the valve opening spring and controls the movement of the lower end portion of the valve opening spring in a vertical direction, and the main valve body may have an upper end locking portion which holds the upper end portion of the valve opening spring and controls the relative movement of the upper end portion of the valve opening spring and the main valve body in a vertical direction.

An ease of assembly of the drive valve can be improved. When assembling the drive valve, it is necessary to perform the work for inserting the valve opening spring and the main valve body into the valve main body and connecting them to the driving portion (the connecting member) as mentioned before. However, according to the aspect mentioned above that includes the lower end locking portion which holds the lower end portion of the valve opening spring and the upper end locking portion which holds the upper end portion, the valve opening spring is locked to the valve main body by the lower end locking portion, and the main valve body is locked to the upper end portion of the valve opening spring by the upper end locking portion. Therefore, the valve opening spring and the main valve body are both locked to the valve main body, and there is no fear of extraction of the valve opening spring and the main valve body installed within the valve main body from the valve main body during the assembly. Thus, it is possible to improve an ease of assembly of the drive valve. A specific assembling sequence will be mentioned in detail in the later description of embodiments with reference to the accompanying drawings.

Further, according to a typical aspect of the present invention, the valve main body is provided in a side surface portion of the valve main body with two or more openings which can serve as the inflow port, the upper end locking portion is a groove which is formed in an outer peripheral surface of the main valve body in such a manner as to extend in a peripheral direction and can fit the upper end portion of the valve opening spring thereto, and the lower end locking portion is a groove which is formed in an inner peripheral surface of the main valve chamber in such a manner as to extend in a peripheral direction and between the openings, and can fit the lower end portion of the valve opening spring thereto.

According to the present invention, it is possible to prevent the valve opening spring from being engaged by the pressing force of the refrigerant and it is possible to prevent the operation failure of the electric drive valve and the valve leakage from being generated. Further according to the aspect of the present invention, it is possible to improve the ease of assembly of the electric drive valve.

The other objects, features and advantages of the present invention are made apparent by the following description of embodiments of the present invention described on the basis of the accompanying drawings. In the drawings, same reference numerals denote the same or corresponding portions.

### BRIEF DESCRIPTION OF DRAWINGS

Fig. 1 is a vertical cross-sectional view (a cross-sectional view along a line X1-X1 in Fig. 3) showing a valve opened state of an electric drive valve (a pilot type solenoid valve) according to a first embodiment of the present invention.
Fig. 2 is a vertical cross-sectional view (a cross-sectional view along a line X2-X2 in Fig. 3) showing the valve opened state of the electric drive valve according to the first embodiment.
Fig. 3 is a plan view of the electric drive valve (a coil and the like are not illustrated) according to the first embodiment.
Fig. 4 is a perspective view showing a valve main body of the electric drive valve according to the first embodiment in a notched manner.
Fig. 5 is a vertical cross-sectional view (the cross-sectional view along the line X1-X1 in Fig. 3) showing a valve closed state of the electric drive valve according to the first embodiment.
Fig. 6 is a vertical cross-sectional view (the cross-sectional view along a line X2-X2 in Fig. 3) showing the valve closed state of the electric drive valve according to the first embodiment.
Fig. 7 is a vertical cross-sectional view showing an electric drive valve according to a second embodiment of the present invention (in a state in which a pilot type solenoid valve/valve portion is connected to a driving portion, where a coil and the like are not illustrated).
Fig. 8 is a vertical cross-sectional view showing an assembling step of the electric drive valve according to the second embodiment (in a state in which a valve opening spring is attached to a main valve body).
Fig. 9 is a vertical cross-sectional view showing the assembling step of the electric drive valve according to the second embodiment (in a state in which the main valve body attaching the valve opening spring thereto is assembled in the valve main body).
Fig. 10 is a vertical cross-sectional view showing the assembling step of the electric drive valve according to the second embodiment (a step of connecting the valve portion and the driving portion).
Fig. 11 is a vertical cross-sectional view showing a modified example of the electric drive valve according to the second embodiment (the driving portion is not illustrated).
Fig. 12 is a vertical cross-sectional view showing a valve opened state of a conventional electric drive valve (a pilot type solenoid valve).
Fig. 13 is a vertical cross-sectional view showing a normal valve closed state (a state in which a valve is normally closed by stopping energization to a coil).
Fig. 14 is a vertical cross-sectional view showing an abnormal valve opened state (a state in which engagement of a valve opening spring with a main valve seat surface is generated after stopping the energization to the coil) of the conventional electric drive valve.
Fig. 15 is a vertical cross-sectional view showing a valve opened state of an electric drive valve (a pilot type solenoid valve) according to a comparative example.
Fig. 16 is a vertical cross-sectional view showing an assembling step of the conventional electric drive valve (in a state in which a valve opening spring and a main valve are assembled in a valve main body).
Fig. 17 is a vertical cross-sectional view showing the assembling step of the conventional electric drive valve (in a state in which a valve closing spring and a plunger are assembled in a sleeve of a driving portion).
Fig. 18 is a vertical cross-sectional view showing the assembling step of the conventional electric drive valve (in a state in which a valve portion and the driving portion are connected).

### DESCRIPTION OF EMBODIMENTS

### [First Embodiment]

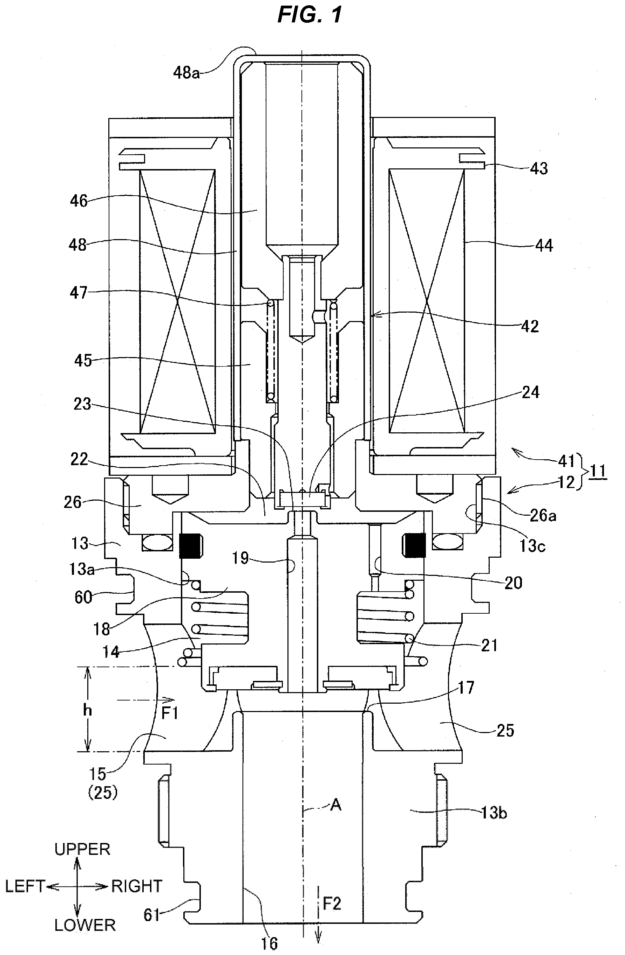

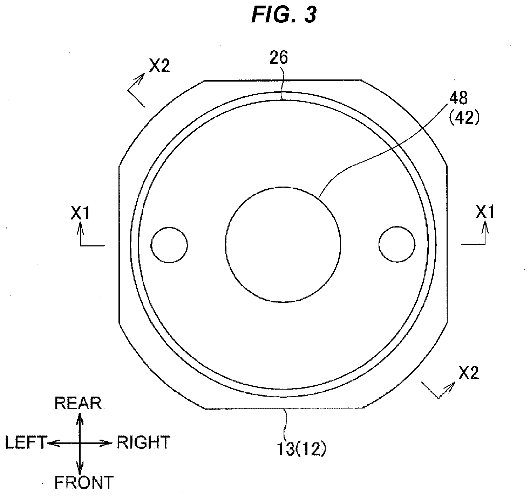

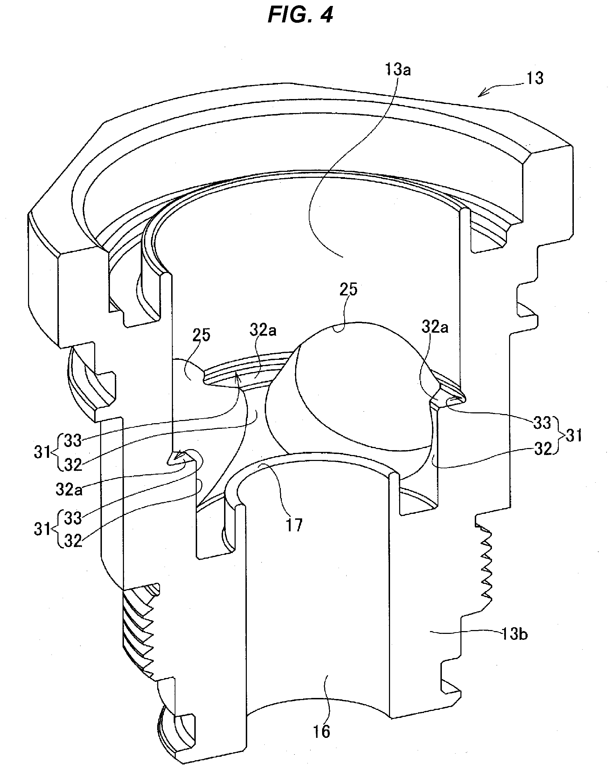

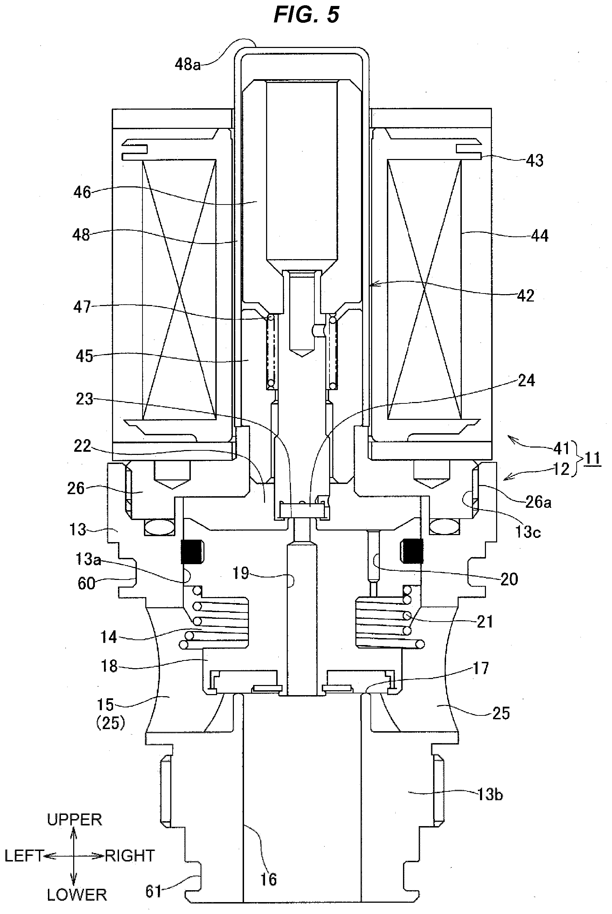

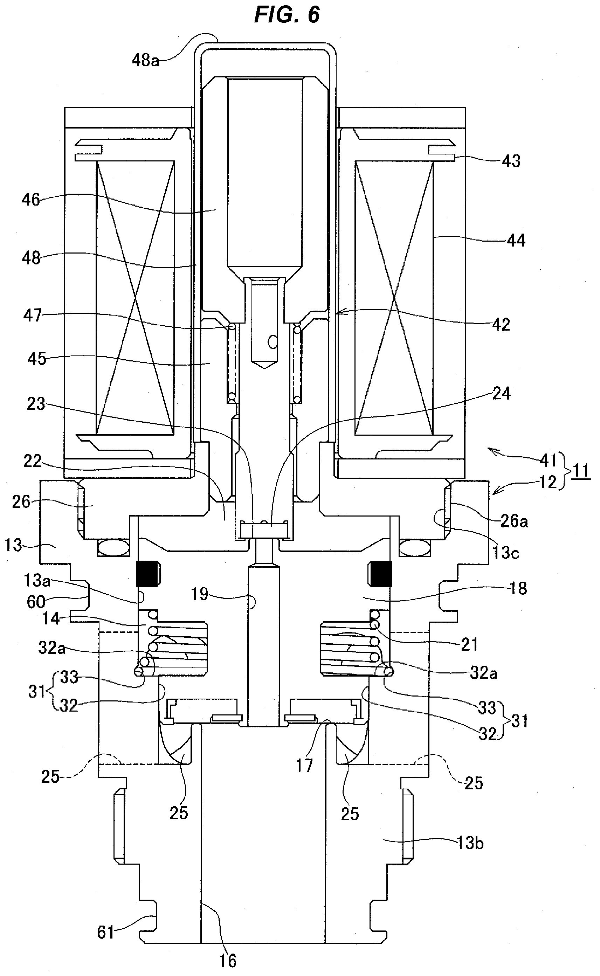

As shown in Figs. 1 to 6, an electric drive valve (a solenoid valve 11) according to a first embodiment of the present invention is a pilot type solenoid valve including a valve portion 12 which opens and closes a flow channel for a refrigerant, and an electromagnetic actuator (an electric driving device) 41 which drives the valve portion 12, and controlling a main valve opening and closing the refrigerant flow channel with a pilot valve. Further, the solenoid valve 11 is a so-called cartridge type solenoid valve which can be assembled in a refrigerant cycle device such as a heat pump type heating and cooling system by being mounted to a housing member (not shown) provided with an inflow channel and an outflow channel for the refrigerant, and is a normal open type (normally open type) valve which comes to a valve opened state when not being energized.

The present invention is not limited to the cartridge type valve. Further, the present invention is not limited to the normal open type valve, but can be similarly applied to a normal closed type (normally closed type) valve. Further, each of the drawings shows a two-dimensional coordinate which appropriately represents a vertical direction, a lateral direction and a longitudinal direction and is orthogonal to each other, and the following description will be given on the basis of these directions. However, since the solenoid valve according to the present invention and the present embodiments can be used in various directions, the directions are provided as a matter of convenience, and do not restrict a configuration of each of portions of the present invention.

The solenoid valve 11 according to the present embodiment has a valve main body 13 which is provided in its inner portion with a main valve chamber 14, an inflow port 15 which is pierced in a side surface (a peripheral surface) of the valve main body 13 in such a manner as to allow a refrigerant to flow into the main valve chamber 14, an outflow port 16 which passes through a bottom portion 13b of the valve main body 13 in a vertical direction in such a manner as to allow the refrigerant to flow out of the main valve chamber 14 and has an upper end portion rising perpendicularly upward and protruding out into the main valve chamber 14, a main valve seat 17 which is formed in an upper end of the outflow port 16, a main valve body 18 which opens and closes the outflow port 16 by moving forward and backward (moving up and down) with respect to the main valve seat 17, a valve opening spring 21 which biases the main valve body 18 in a valve opening direction (upward), and a connecting member 26 which connects an electromagnetic actuator 31 to the valve main body 13, as the valve portion 12 (the main valve).

The valve main body 13 is a cylindrical member which is open (forms an opening) in an upper surface and a lower surface, the opening in the upper surface is closed by the connecting member 26, and the opening in the lower surface forms the outflow port 16. Further, the solenoid valve 11 according to the present embodiment is used by being mounted to the housing member as mentioned above. However, the outflow port 16 in the bottom surface of the valve main body 13 communicates with an outflow channel open to a bottom surface of a valve mounting hole in the housing member when the valve main body 13 is fitted and inserted to the valve mounting hole of the housing member, thereby allowing the refrigerant within the main valve chamber 14 to flow out through the outflow channel.

In the meantime, the valve main body 13 is provided in a peripheral surface with a plurality of (one by one for front, rear, right and left in the present embodiment) openings 25 which can be used as the inflow port 15, and these openings 25 form the inflow port 15. Specifically, when the valve main body 13 is fitted and inserted to the valve mounting hole of the housing member, four openings 25 are configured to be communicated by a ring-like gap which is formed between the valve main body 13 and the housing member. Thus, the refrigerant can be flown into the main valve chamber 14 through the openings 25.

The ring-like gap formed between the valve main body 13 and the housing member is sealed by a seal member (an O-ring, not illustrated) which is mounted to each of concave portions 60 and 61 of the valve main body 13, and the refrigerant does not leak to an external portion and the outflow channel.

An upper portion of the main valve body 18 is supported by a cylinder portion 13a formed in an upper portion of the valve main body 13 to be slidable in the vertical direction. Further, a valve opening spring 21 biasing the main valve body 18 in a valve opening direction (upward) is disposed between a bottom surface of the main valve chamber 14 and the main valve body 18. The valve opening spring 21 is a compression coil spring which is installed in a compressed state between a plurality of (four in the present embodiment) support portions 31 formed in an inner peripheral surface of the main valve chamber 14, and a step portion formed in a lower surface of an upper portion of the main valve body 18 slidably supported by the cylinder portion 13a in such a manner as to surround an intermediate portion of the main valve body 18.

The support portions 31 supporting the lower end of the valve opening spring 21 are respectively formed between the adjacent openings 25. Each of the support portions 31 has a protruding portion 32 which protrudes toward a center axis A of the solenoid valve 11 (the main valve chamber 14) from an inner peripheral surface of the valve main body 18 (the main valve chamber 14), and a fitting groove 33 which allows a lower end portion of the valve opening spring 21 to fit thereinto when the valve opening spring 21 is installed within the main valve chamber 14. The protruding portion 32 has an upper surface 32a which is expanded horizontally in such a manner as to mount the valve opening spring 21 thereon, and the fitting groove 33 is formed in an inner peripheral surface of the valve main body 13 so as to be along an outer periphery (an edge portion in a far side from the center axis A of the solenoid valve 11) of the upper surface 32a.

The fitting groove 33 is a groove with a triangular cross section formed by a tapered upper surface expanding a lower end portion of the inner peripheral surface of the cylinder portion 13a outward (in a direction away from the center axis A of the solenoid valve 11) as it goes downward, and a lower surface horizontally expanding outward following the upper surface 32a of the protruding portion. Further, a lower end portion of the valve opening spring 21 is formed in a shape broadening toward the end which is expanded (diameter enlarged) downward in such a manner as to fit into the fitting groove 33. Therefore, according to the present embodiment, the lower end portion of the valve opening spring 21 can be fitted and the valve opening spring 21 can be installed in the inner portion of the valve main body 13 only by a simple operation of dropping the valve opening spring 21 into the main valve chamber 14 from the upper surface opening of the valve main body 13.

Each of the support portions 31 has a function of holding the lower end portion of the valve opening spring 21 within the fitting groove 33, and also has a function of guiding the main valve body 18 which moves forward and backward (moves up and down) with respect to the main valve seat 17 within the main valve chamber 14 by the contact of the protruding portion 32 with the lower peripheral surface of the main valve body 18 in such a manner as to allow the main valve body 18 to be slidable in the vertical direction and preventing the main valve body 18 from side slipping (displacing in a direction of crossing the center axis A) or inclining.

Particularly, according to the present embodiment (same in a second embodiment mentioned later), not only the upper portion of the main valve body 18 is slidably supported by the cylinder portion 13a in the upper portion of the valve main body, but also the lower portion of the main valve body 18 is slidably supported by the support portion 31 (the protruding portion 32) (both the upper end portion and the lower end portion are supported). Therefore, it is possible to securely prevent the side slip and the inclination of the main valve body 18, and it is possible to further enhance the operability and the durability of the solenoid valve 11.

A height h of the support portion 31 (a distance in a vertical direction from the lower end of the inflow port 15 to the upper surface 32a of the protruding portion 32), that is, a height of the upper surface 32a of the protruding portion by which the lower end of the valve opening spring 21 is supported, is set to such a height that the protruding portion upper surface 32a is arranged above a center of the inflow port 15 in the vertical direction (a height position of half of a diameter of the inflow port 15 from the lower end of the inflow port 15, that is, a center axis of the inflow port 15), and below the upper end of the inflow port 15.

The support portion 31 (the protruding portion upper surface 32a) is set to be higher than the center of the inflow port 15 in the vertical direction for preventing the valve opening spring 21 from being exposed to the pressing force of the refrigerant flowing into the main valve chamber 14 from the inflow port 15 as much as possible. Particularly, in the gas-liquid two-phase state of the refrigerant, the liquid phase having the strong pressing force for the valve opening spring 21 flows in the lower end side of the inflow port 15. Therefore, by setting such a height, it is possible to avoid or lighten the strong pressing force applied to the valve opening spring 21 from the liquid phase, and it is possible to effectively prevent the valve opening spring 21 from engaging. Further, in the present embodiment, the height of the support portion 31 is set to be higher than the height of the main valve seat 17. In this regard, the present embodiment is configured to hardly affected by the pressing force of the refrigerant flowing toward the outflow port 16 (the main valve seat 17) from the inflow port 15 in the valve opening spring 21.

In the meantime, the protruding portion upper surface 32a is positioned below the upper end of the inflow port 15 for suppressing the height of the solenoid valve 11.

In the present embodiment, the lower end portion of the valve opening spring 21 is supported at the height position as mentioned above. Therefore, the lower end of the valve opening spring 21 is visible through the opening 25 in a state before being installed in the housing member.

The connecting member 26 closing the upper surface opening of the valve main body 13 is a ring-like member having a center hole, and is provided on an outer peripheral surface with a male screw 26a which engages with the female screw 13c formed in the inner peripheral surface of the upper surface opening of the valve main body 13. The connecting member 26 is fixed to the valve main body 13 by being screwed into the upper surface opening of the valve main body 13. Further, a suction element 45 (mentioned later) is fitted to the center hole of the connecting member 26 to be fixed.

The main valve body 18 has a pilot passage 19 which passes through a center portion thereof in the vertical direction and communicates the main valve chamber 14 with the pilot valve chamber 22, and a pressure equalizing channel 20 which similarly passes through the main valve body 18 in the vertical direction to communicate the main valve chamber 14 with the pilot valve chamber 22, and has a smaller diameter than the pilot passage 19. The main valve chamber 14 is a space which faces a space between the main valve body 18 and the main valve seat 17 and faces the inflow port 15, and the pilot valve chamber 22 is a space which is formed in an upper side of the main valve body 18 (between the main valve body 18 and the connecting member 26). Further, an upper surface peripheral edge portion of the main valve body 18 is protruded upward and the peripheral edge portion comes into contact with a lower surface of the connecting member 26 in a valve opened state in which the main valve body 18 rises, so that the main valve body 18 stops.

A pilot valve is disposed between the upper surface of the main valve body 18 and the electromagnetic actuator 41. Specifically, a pilot valve seat 23 is formed in an upper end of the pilot passage 19 which is open to the pilot valve chamber 22 formed in the upper side of the main valve body 18 (in an upper surface center portion of the main valve body 18), and a pilot valve body 24 is provided so as to come into contact with and disconnected from the pilot valve seat 23. The pilot valve body 24 is fixed to a lower end of the plunger 46 (mentioned later), and opens and closes the pilot passage 19 by moving up and down together with the plunger 46.

The electromagnetic actuator 41 driving the pilot valve has a coil 44 in which a winding wire is applied to a bobbin 43, the suction element 45 which is arranged in an inner side of the coil 44, and the plunger 46 which is attracted to the suction element 45 by a magnetic force generated by the coil 44. The bobbin 43 is provided in a center portion with a tubular portion, and is arranged within the tubular portion in a state in which the suction element 45 and the plunger 46 are housed in the sleeve 48. The sleeve 48 is a bottomless and covered (closed in an upper surface and opened in a lower surface) tubular member, is fixed in a lower end portion thereof to an outer peripheral surface of the suction element 45, and forms a sealed space in an upper surface portion of the valve main body 13 together with the connecting member 26. The plunger 46 is housed in the inner portion of the sleeve 48 in such a manner as to be slidable in the vertical direction, and an upper coil spring (a compression coil spring) 47 which biases upward the plunger 46 is provided between the plunger 46 and the suction element 45, and biases the pilot valve body 24 in a valve opening direction.

A description will be given of a motion of the solenoid valve according to the present embodiment as follows.

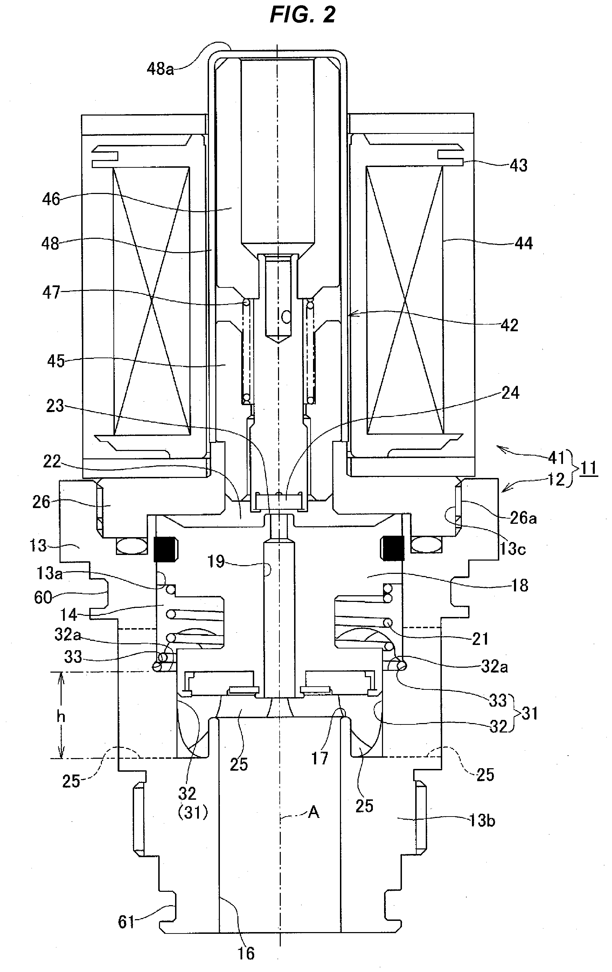

In the valve opened state shown in Figs. 1 and 2, the pilot passage 19 is opened, and the high-pressure refrigerant flowing into the main valve chamber 14 from the inflow port 15 and flowing into the pilot valve chamber 22 through the pressure equalizing channel 20 is discharged out of the outflow port 16 through the pilot passage 19 without staying within the pilot valve chamber 22. Therefore, the pressure within the pilot valve chamber 22 is not increased, the main valve body 18 is pressed against the lower surface of the connecting member 26 by the biasing force of the valve opening spring 21 biasing the main valve body 18 upward (in the valve opening direction) to maintain the valve opened state, and the refrigerant (refer to an arrow F1) flowing into the main valve chamber 14 from the inflow port 15 flows out of the outflow port 16 (refer to an arrow F2).

In this valve opened state, the lower end portion of the valve opening spring 21 is arranged upward in comparison with the conventional one as already mentioned in the present embodiment. Therefore, it is possible to suppress the pressing force applied to the valve opening spring 21 from the refrigerant to be low, thereby preventing the valve opening spring 21 from being deformed and displaced. It is possible to prevent such an operation failure that the valve opening spring 21 is engaged with the main valve seat surface when a valve is operated to be closed as mentioned next, the main valve can not be closed and the valve leakage is generated from being generated.

In the valve opened state mentioned above, when energizing the coil 44 within the electromagnetic actuator 41, the plunger 46 moves down against the biasing force of the upper coil spring 47 by being sucked by the suction element 45, and allows the pilot valve body 24 to seat on the pilot valve seat 23. Thus, the pilot passage 19 is closed, the pressure of the refrigerant introduced to the pilot valve chamber 22 through the pressure equalizing channel 20 is accumulated without being discharged through the pilot passage 19, and the pressure within the pilot valve chamber 22 rises. Further, in a case where the force for pressing the main valve body 18 goes beyond the upward biasing force of the valve opening spring 21, the force for pressing the main valve body 18 being caused by the refrigerant pressure within the pilot valve chamber 22 (more accurately, the differential pressure between the pilot valve chamber 22 and the main valve chamber 14), and the suction force of the suction element 45 (the downward force sucking the plunger 46), the main valve body 18 moves down and seats on the main valve seat 17. Thus, there comes a valve closed state in which the outflow port 16 is closed.

In the meantime, when the energization of the coil 44 is stopped from the valve closed state, the suction force of the suction element 45 disappears and the plunger 46 is disconnected from the suction element 45. Therefore, the plunger 46 is pushed back upward by the upper coil spring 47, the pilot valve body 24 is separated from the pilot valve seat 23, and the pilot passage 19 is opened. Then, the refrigerant accumulated in the pilot valve chamber 22 is discharged out of the outflow port 16 through the pilot passage 19, and the pressure within the pilot valve chamber 22 is lowered. Further, the differential pressure pulling up the main valve body 18 is generated in the upper and lower surfaces of the main valve body 18 since the cross-sectional area of the pilot passage 19 is greater than the pressure equalizing channel 20. In addition, the valve opening spring 21 has the biasing force pulling up the main valve body 18. Accordingly, the main valve body 18 is pushed up, and the main valve body 18 is separated from the main valve seat 17, thereby forming the valve opened state (refer to Figs. 1 and 2) in which the outflow port 16 is opened.

In this valve opened state, the plunger 46 is pushed up by the upper coil spring 47 and exists at the uppermost position where the plunger 46 comes into contact with the top surface portion 48a of the sleeve 48, and the main valve body 18 comes into contact with the lower surface of the connecting member 26 and is stopped. Thus, a fixed gap is formed between the pilot valve body 24 in the lower end of the plunger and the pilot valve seat 23 in the center portion of the upper surface of the main valve body 18, and the pilot passage 19 is opened.

### [Second Embodiment]

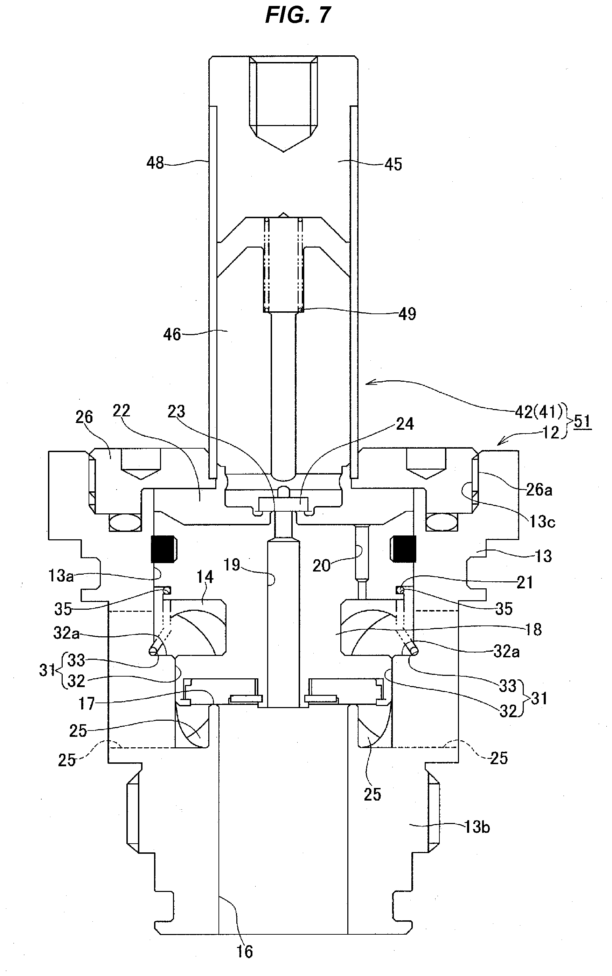

A description will be given of a second embodiment according to the present invention with reference to Figs. 7 to 11. As shown in Fig. 7, an electric drive valve (a solenoid valve 51) according to a second embodiment of the present invention is a cartridge type solenoid valve including a pilot type valve portion 12, and an electromagnetic actuator 41 (a coil and the like are not illustrated) which includes a driving portion 42 driving the valve portion 12, in the same manner as the first embodiment, and is provided with a support portion 31 which supports a lower end portion of a valve opening spring 21 biasing a main valve body 18 in a valve opening direction at an upper position within a main valve chamber 14 and prevents the valve opening spring 21 from being engaged. In addition, it has a structure for improving an ease of assembly. In the description of the present embodiment, same reference numerals are attached to the same or corresponding portions as those of the first embodiment, a redundant explanation will be omitted, and a description will be given mainly on different points.

Further, the solenoid valve 51 according to the present embodiment is a normal closed type (normally closed type) valve which comes to a valve closed state when not being energized, as is different from the first embodiment. Thus, the electromagnetic actuator 41 has a sleeve 48 which is a bottomless and coverless (opened in both an upper surface and a lower surface) tubular member, a suction element 45 which closes an upper surface of the sleeve 48 by an upper end portion of the sleeve 48 being fixed to an outer peripheral surface, a plunger 46 which is disposed below the suction element 45 in such a manner as to be slidable (movable up and down) within the sleeve 48, and a valve closing spring (a compression coil spring) 49 which is arranged between the suction element 45 and the plunger 46, as the driving portion 42. The valve closing spring 49 biases the plunger 46 downward (a direction of closing the pilot valve).

Further, the plunger 46 is provided in a lower end with a pilot valve body 24, and is attracted to the suction element 45 by a magnetic force which is generated by a coil (not shown) arranged in an outer side of the sleeve 48. Further, the sleeve 48 is fixed to an upper surface of a connecting member 26 by being fitted and inserted a lower end portion to a center hole of the connecting member 26.

Further, the solenoid valve 51 according to the present embodiment is provided with a protruding portion 32 and a fitting groove 33 (refer to as "lower fitting groove" in the present embodiment) as a support portion 31 which holds a lower end portion of a valve opening spring 21 in the same manner as the first embodiment. In addition to this, it has an upper fitting groove 35 which holds an upper end portion of the valve opening spring 21.

The upper fitting groove 35 is formed in a lower surface of an upper portion of a main valve body 18 slidably supported to a cylinder portion 13a of a valve main body 13 in such a manner as to extend in a peripheral direction along an outer peripheral surface of the main valve body 18, and the valve opening spring 21 and the main valve body 18 can be integrated by fitting an upper end portion of the valve opening spring 21 into the upper fitting groove 35.

A description will be given of an assembling step of the solenoid valve according to the present embodiment.

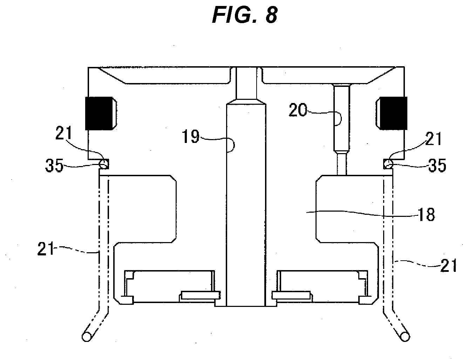

First, the valve opening spring 21 is attached to the main valve body 18 by fitting the upper end portion of the valve opening spring 21 into the upper fitting groove 35 as shown in Fig. 8.

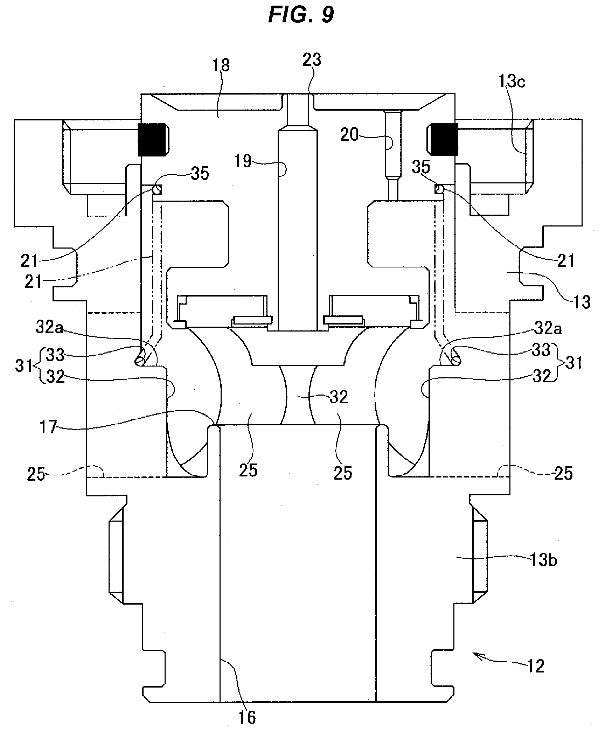

Next, the main valve body 18 attaching the valve opening spring 21 thereto is dropped into an inner portion of the valve main body 13 from the upper surface opening of the valve main body 13 as shown in Fig. 9. Thus, the lower end portion of the valve opening spring 21 is fitted into the lower fitting groove 33 of the valve main body 13 (the support portion 31), and the valve opening spring 21 and the main valve body 18 can be installed in the valve main body 13. Further, in this state, the main valve body 18 and the valve opening spring 21 are integrated via the upper fitting groove 35, and the valve opening spring 21 and the valve main body 13 are integrated via the lower fitting groove 33. Therefore, the valve opening spring 21 and the main valve body 18 do not fall off from the valve main body 13 even by inversing the valve main body 13 (even by inverting upside down).

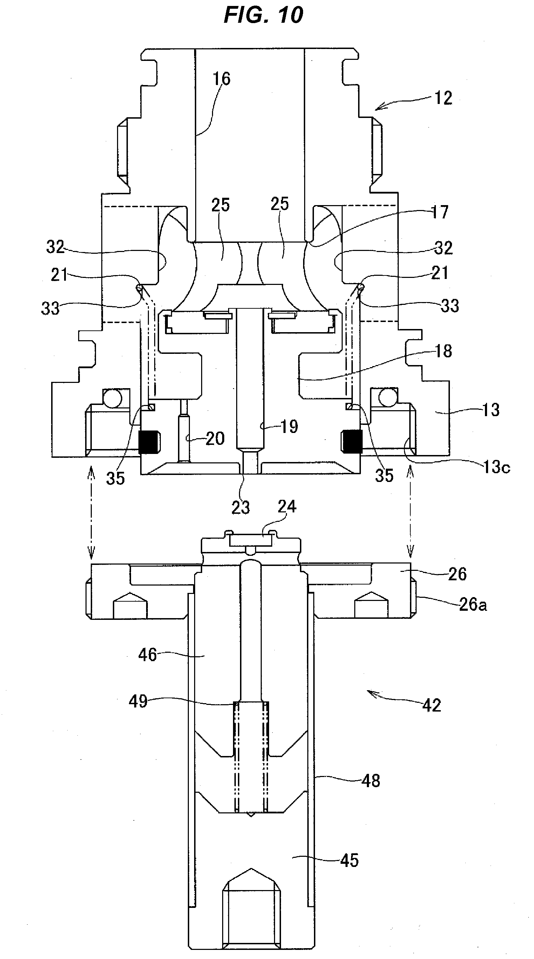

Therefore, by supporting a driving portion 42 separately prepared as shown in Fig. 10 in a state in which it is inverted upside down), relatively rotating both the elements in such a manner as to put the valve portion 12 thereon in a state in which the valve portion 12 is inverted upside down, and screwing the connecting member 26 into the upper surface opening of the valve main body 13 (engaging a male screw 26a formed on an outer peripheral surface of the connecting member 26 with a female screw 13c formed on an inner peripheral surface of the upper surface opening of the valve main body 13), the valve portion 12 can be connected to the driving portion 42.

During this connecting work, there is no fear that the plunger 46 and the valve closing spring 49 extract out of the driving portion 42 (the sleeve 48). The plunger 46 of the driving portion 42 and the valve closing spring 49 are only inserted into the sleeve 48 from the lower surface opening of the sleeve 48 and are not fixed, but the lower surface opening of the sleeve 48 is positioned in the upper side by performing the work in the state in which the driving portion 42 is inverted upside down. As a result, the upper surface opening of the sleeve 48 positioned in the lower side is fixed the suction element 45 thereto and is closed during the work.

Each of the parts (the valve main body 13, the valve opening spring 21 and the main valve body 18) of the valve portion 12 is integrated since the valve opening spring 21 is fixed to the upper fitting groove 35 and the lower fitting groove 33. Therefore, the main valve body 18 and the valve opening spring 21 do not fall out of the valve portion 12 (the valve main body 13).

Therefore, according to the present embodiment, it is possible to effectively perform the work for connecting the valve portion 12 and the driving portion 42, and it is possible to improve the ease of assembly of the solenoid valve 51.

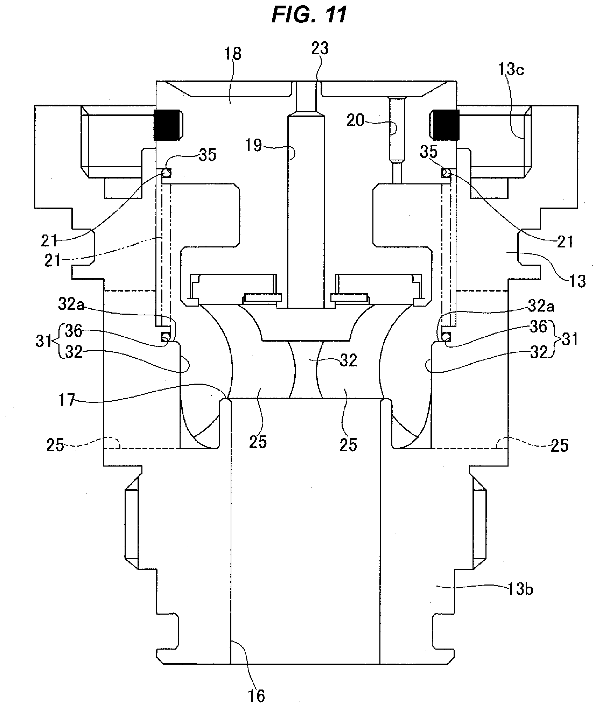

Further, Fig. 11 shows a modified example of the present embodiment. In this modified example, the upper surface of the lower fitting groove 36 holding the lower end portion of the valve opening spring 21 is formed horizontal in such a manner as to be parallel to the upper surface 32a of the protruding portion. According to the aspect mentioned above, it is possible to make the valve opening spring 21 hardly come off from the lower fitting groove 36 during the connecting work (Fig. 10), and it is possible to more securely prevent the main valve body 18 and the valve opening spring 21 from falling off.

The embodiments according to the present invention are described above. However, it is apparent for a person skilled in the art that the present invention is not limited to these embodiments, but can be variously modified within the scope of the claims.

For example, the present invention is not limited to the solenoid valve, but can be applied, for example, to an electric drive valve such as a motor valve including an actuator which moves a valve body with the use of a motor. In a case where the present invention is applied to the motor valve, the pilot valve body may be configured to be disposed in a leading end of an elevating member (for example, a valve shaft or a valve rod) serving as a moving body which is moved up and down by an elevating device with the use of a screw feeding mechanism, thereby opening and closing the pilot passage.

### REFERENCE SIGNS LIST

A center axis of solenoid valve
F, F2 flow of refrigerant
11, 51 solenoid valve
12 valve portion
13 valve main body
13a cylinder portion
13b bottom portion of valve main body
13c female screw
14 main valve chamber
15 inflow port
16 outflow port
17 main valve seat
18 main valve body
19 pilot passage
20 pressure equalizing channel
21 valve opening spring
22 pilot valve chamber
23 pilot valve seat
24 pilot valve body
25 opening
26 connecting member
26a male screw
31 support portion
32 protruding portion
32a upper surface of protruding portion
33, 36 fitting groove (lower fitting groove)
35 upper fitting groove
41 electromagnetic actuator
42 driving portion
43 bobbin
44 coil
45 suction element
46 plunger
47 upper coil spring
48 sleeve
48a top surface portion of sleeve
49 valve closing spring
60, 61 concave portion

## Claims

1. An electric drive valve comprising:
a valve main body which has a main valve chamber and a pilot valve chamber in an inner portion thereof, has an inflow port allowing a refrigerant to flow into the main valve chamber and an outflow port allowing the refrigerant to flow out of the main valve chamber, and is provided with a main valve seat disposed in an end portion of the outflow port in the main valve chamber side;
a main valve body which opens and closes the outflow port by moving forward and backward with respect to the main valve seat;
a valve opening spring which biases the main valve body in a valve opening direction;
a pilot passage which passes through the main valve body and selectively communicates the pilot valve chamber and the outflow port;
a pressure equalizing channel which communicates the main valve chamber and the pilot valve chamber;
a pilot valve seat which is formed in an end portion of the pilot passage in the pilot valve chamber side;
a pilot valve body which opens and closes the pilot passage by moving forward and backward with respect to the pilot valve seat; and
an electric driving device which drives the pilot valve body,
wherein the inflow port is formed in such a manner as to be open to a side surface portion of the main valve chamber, and
wherein the valve opening spring is disposed in such a manner that a lower end of the valve opening spring is positioned above a lower end of the inflow port on the assumption that a direction toward the main valve body from the main valve seat is up and a direction toward the main valve seat from the main valve body is down.

2. The electric drive valve according to claim 1, wherein the valve opening spring is disposed in such a manner that the lower end of the valve opening spring is positioned below an upper end of the inflow port.

3. An electric drive valve comprising:
a valve main body which has a main valve chamber and a pilot valve chamber in an inner portion thereof, has an inflow port allowing a refrigerant to flow into the main valve chamber and an outflow port allowing the refrigerant to flow out of the main valve chamber, and is provided with a main valve seat disposed in an end portion of the outflow port in the main valve chamber side;
a main valve body which opens and closes the outflow port by moving forward and backward with respect to the main valve seat;
a valve opening spring which biases the main valve body in a valve opening direction;
a pilot passage which passes through the main valve body and selectively communicates the pilot valve chamber and the outflow port;
a pressure equalizing channel which communicates the main valve chamber and the pilot valve chamber;
a pilot valve seat which is formed in an end portion of the pilot passage in the pilot valve chamber side;
a pilot valve body which opens and closes the pilot passage by moving forward and backward with respect to the pilot valve seat; and
an electric driving device which drives the pilot valve body,
wherein the valve opening spring is disposed in such a manner that a lower end of the valve opening spring is positioned above the main valve seat on the assumption that a direction toward the main valve body from the main valve seat is up and a direction toward the main valve seat from the main valve body is down.

4. The electric drive valve according to any one of claims 1 to 3, wherein a plurality of support portions are disposed in an inner peripheral surface of the main valve chamber, the support portions protruding toward a center portion of the main valve chamber from the inner peripheral surface of the main valve chamber and supporting the lower end side of the valve opening spring, and
wherein the main valve body is guided by the support portions by moving up and down while being in contact with the support portions.

5. The electric drive valve according to claim 4, wherein one or more support portion among a plurality of support portions has a lower end locking portion which holds the lower end portion of the valve opening spring and controls the movement of the lower end portion of the valve opening spring in a vertical direction, and
wherein the main valve body has an upper end locking portion which holds the upper end portion of the valve opening spring and controls the relative movement of the upper end portion of the valve opening spring and the main valve body in a vertical direction.

6. The electric drive valve according to claim 5, wherein the valve main body is provided in a side surface portion of the valve main body with two or more openings which can serve as the inflow port,
wherein the upper end locking portion is a groove which is formed in an outer peripheral surface of the main valve body in such a manner as to extend in a peripheral direction and can fit the upper end portion of the valve opening spring thereto, and
wherein the lower end locking portion is a groove which is formed in an inner peripheral surface of the main valve chamber in such a manner as to extend in a peripheral direction and between the openings, and can fit the lower end portion of the valve opening spring thereto.
